# DEMANDE DE BREVET EUROPEEN

(11) **EP 4 554 085 A1**
(43) Date de publication de la demande: **14.05.2025**
(21) Numéro de dépôt: 24210622.7
(22) Date de dépôt: 04.11.2024
(51) Int. Cl.: H02S 20/00, H02S 30/10

(54) **ENSEMBLE POUR PANNEAU PHOTOVOLTAÏQUE**

(30) Priorité: 07.11.2023 FR 2312078
(71) Demandeur: DELTA DORE, 35270 Bonnemain (FR)
(72) Inventeur: MACE, Loick, 35270 BONNEMAIN (FR); MONTIER, François, 35270 BONNEMAIN (FR); EVEN, Nicolas, 35270 BONNEMAIN (FR); DUFEE, Julien, 35270 BONNEMAIN (FR)
(74) Mandataire: Cabinet Le Guen Maillet

(57) **Abrégé**

L'invention concerne un ensemble (100) pour panneau photovoltaïque (102) comportant un réceptacle (104) recevant le panneau photovoltaïque (102) et présentant un fond (104a), un couvercle (106) comportant un cadre (106a) arrangé au-dessus du panneau photovoltaïque (102), et au moins un système de fixation qui assure la fixation du couvercle (106) au réceptacle (104), où le fond (104a) est percé d'au moins une fenêtre (121), où pour chaque fenêtre (121), une languette (120) est arrangée dans la fenêtre (121) et présente deux premiers bords solidaires du fond (104a).

## Description

### DOMAINE TECHNIQUE

La présente invention se rapporte à un ensemble pour panneau photovoltaïque, en particulier dans le cadre de la mise en place d'un tel panneau photovoltaïque pour alimenter un système d'entraînement motorisé d'un occultant tel qu'un volet roulant électrique, ou d'un système destiné à faire de l'ombre tel qu'un store banne.

### ÉTAT DE LA TECHNIQUE ANTÉRIEURE

Un volet roulant comporte classiquement un coffre dans lequel est enroulé le volet. Il est classique qu'un tel volet roulant soit électrique, c'est-à-dire qu'il comporte un moteur électrique qui assure l'enroulage du volet dans le coffre et le déroulage du volet sous le coffre pour obturer une ouverture telle qu'une porte ou une fenêtre.

Le moteur électrique peut être alimenté par le réseau électrique du bâtiment, mais il peut également être alimenté par un panneau photovoltaïque qui est généralement fixé sur le coffre.

Actuellement, la fixation d'un tel panneau photovoltaïque sur le coffre nécessite l'utilisation d'outils et de fournitures particuliers et il est souhaitable de trouver un arrangement différent limitant l'utilisation d'outils et de fournitures.

### EXPOSÉ DE L'INVENTION

Un objet de la présente invention est de proposer un ensemble pour panneau photovoltaïque qui comporte un réceptacle et un couvercle entre lesquels le panneau photovoltaïque est mis en place et où la solidarisation et la désolidarisation du réceptacle et du couvercle soient simples et sans outils.

À cet effet, est proposé un ensemble pour panneau photovoltaïque comportant :
- un réceptacle destiné à recevoir le panneau photovoltaïque et présentant un fond,
- un couvercle comportant un cadre destiné à être arrangé au-dessus du panneau photovoltaïque, et
- au moins un système de fixation qui assure la fixation du couvercle au réceptacle, où le fond est percé d'au moins une fenêtre, où pour chaque fenêtre, une languette est arrangée dans la fenêtre et présente deux premiers bords solidaires du fond, et où la ou chaque languette est équipée, sur la face opposée au cadre, d'un moyen de fixation à clip destiné à coopérer avec un support et sur la face du côté du cadre, d'une excroissance en saillie au-dessus du fond.

Avantageusement, le fond est équipé de lames ressort arrangées pour pousser le panneau photovoltaïque vers le cadre.

Avantageusement, le réceptacle présente au moins une paroi longitudinale intérieure s'étendant depuis le fond parallèlement à une direction longitudinale, pour chaque paroi longitudinale intérieure, le couvercle présente une paroi longitudinale extérieure s'étendant depuis le cadre et disposée parallèlement en regard et à l'extérieur de la paroi longitudinale intérieure, et pour chaque paire d'une paroi longitudinale extérieure et d'une paroi longitudinale intérieure, le ou chaque système de fixation assure une fixation amovible desdites parois longitudinales entre elles.

Avantageusement, le ou chaque système de fixation comporte un ergot solidaire de ladite paroi longitudinale intérieure et en saillie vers la paroi longitudinale extérieure et présentant parallèlement à la direction longitudinale, une première longueur, et un contre-ergot solidaire de ladite paroi longitudinale extérieure et en saillie vers la paroi longitudinale intérieure et arrangé pour venir de l'autre côté de l'ergot par rapport au cadre, où de part et d'autre dudit contre-ergot parallèlement à la direction longitudinale, est arrangé un évidement présentant parallèlement à la direction longitudinale, une deuxième longueur supérieure à la première longueur.

Avantageusement, l'ensemble comporte des moyens de blocage en translation du couvercle par rapport au réceptacle parallèlement à la direction longitudinale.

Avantageusement, les moyens de blocage comportent deux butées solidaires du réceptacle et disposées le long de la direction longitudinale, pour chaque butée, une contre-butée solidaire du couvercle, où les deux contre-butées sont arrangées entre les deux butées, et lorsque l'ergot et le contre-ergot associé sont alignés perpendiculairement à la direction longitudinale, la distance entre chaque butée et la contre-butée associée est inférieure à la première longueur.

Avantageusement, chaque paroi longitudinale extérieure comporte une rainure dans laquelle loge la paroi longitudinale intérieure associée.

L'invention propose également un coffre pour occultant ou système pour faire de l'ombre comportant un ensemble selon l'une des variantes précédentes, un panneau photovoltaïque logé dans le réceptacle et un panneau constituant un support et présentant pour chaque moyen de fixation à clip, un trou traversant pour y loger le moyen de fixation à clip.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en perspective d'un ensemble pour panneau photovoltaïque selon l'invention,
[Fig. 2] est une vue éclatée de l'ensemble selon l'invention,
[Fig. 3] est une vue en coupe de l'ensemble de la Fig. 2 par le plan III,
[Fig. 4] est une vue en coupe de l'ensemble de la Fig. 2 par le plan IV,
[Fig. 5] est une vue de l'ensemble de la Fig. 1 selon la flèche V en position désassemblée,
[Fig. 6] est une vue en coupe de l'ensemble de la Fig. 2 par le plan VI, et
[Fig. 7] est une vue en perspective de l'ensemble selon la flèche VII de la Fig. 6.

### EXPOSÉ DÉTAILLÉ DE MODES DE RÉALISATION

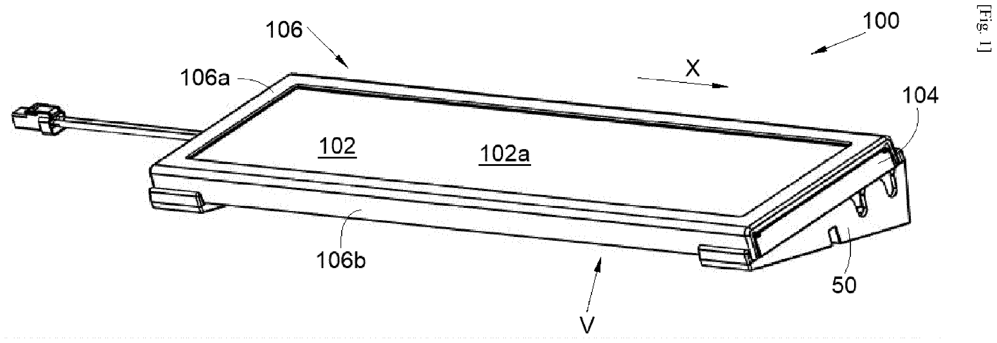

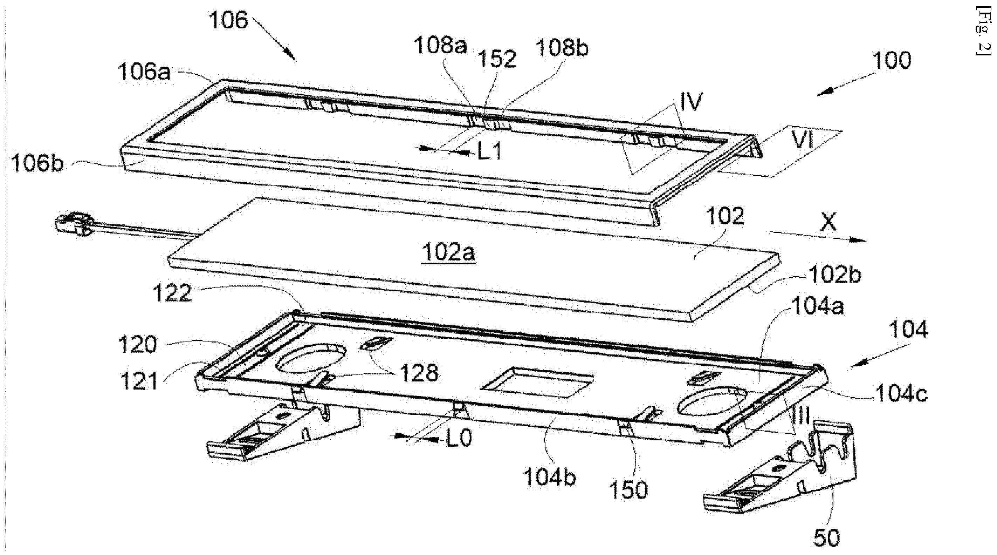

La Fig. 1 et la Fig. 2 montrent un ensemble 100 selon l'invention et destiné à la mise en place d'un panneau photovoltaïque 102, que ce soit sur un coffre pour occultant, tel qu'un volet roulant ou sur un autre élément fixe tel qu'un mur par exemple. L'ensemble 100 peut également être mis en oeuvre dans un système pour faire de l'ombre, tel qu'un store banne. Le panneau photovoltaïque 102 est par ailleurs arrangé pour alimenter électriquement un système d'entraînement motorisé de l'occultant ou du système pour faire de l'ombre.

Dans le mode de réalisation de l'invention présenté ici, l'ensemble 100 est prévu pour être fixé à des supports 50 qui sont ici des équerres destinées à être fixées sur un élément fixe par exemple par des vis ou des rivets. Il y a ici un support 50 à chaque extrémité de l'ensemble 100. Le support 50 peut également prendre la forme d'un panneau constituant un élément d'un coffre pour occultant tel qu'un volet roulant, une pergola à lames mobiles, etc. Dans ce cas, le support 50 est globalement plan et il s'étend sur au moins la longueur de l'ensemble 100.

L'ensemble 100 comporte un réceptacle 104 dans lequel est reçu le panneau photovoltaïque 102 et qui présente un fond 104a.

Dans la mise en place du panneau photovoltaïque 102 dans le réceptacle 104, la face avant 102a du panneau photovoltaïque 102 qui est la face qui porte les cellules photovoltaïques est orientée vers l'extérieur du réceptacle 104, c'est-à-dire à l'opposé du fond 104a, tandis que le dos 102b du panneau photovoltaïque 102 qui est à l'opposé de la face avant 102a est face au fond 104a.

L'ensemble 100 comporte également un couvercle 106 qui comporte un cadre 106a qui est arrangé au-dessus du panneau photovoltaïque 102 en laissant apparaître la face avant 102a du panneau photovoltaïque 102 et plus particulièrement, les cellules photovoltaïques. L'ensemble 100 comporte au moins un système de fixation qui assure la fixation du couvercle 106 au réceptacle 104.

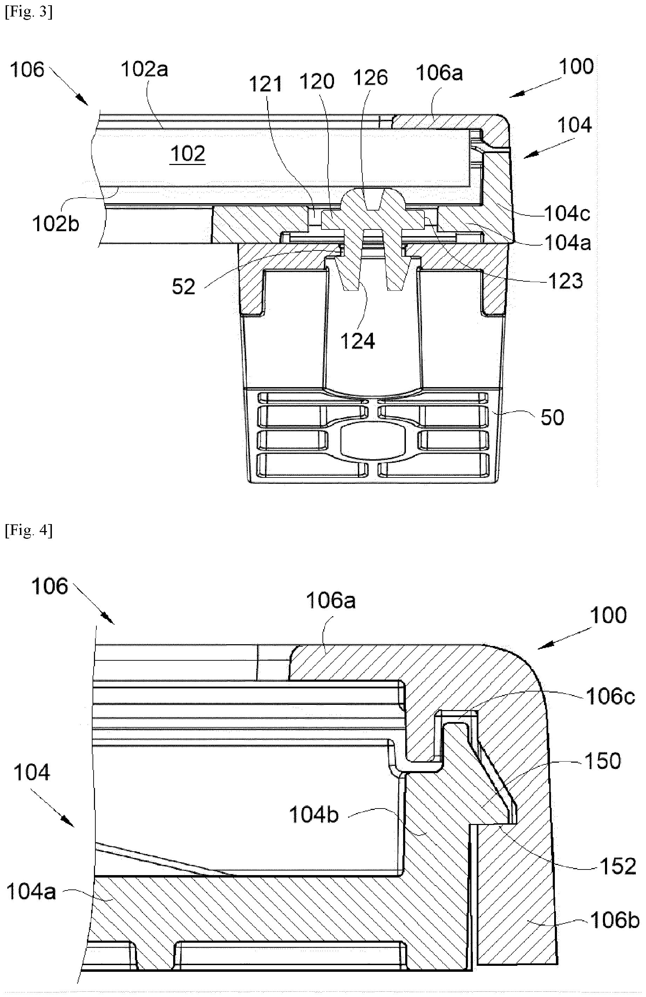

Comme le montrent les Figs. 2 et 3, le fond 104a prend la forme d'une surface plane qui est percée d'au moins une fenêtre 121 traversante.

Pour chaque fenêtre 121, une languette 120 est arrangée dans la fenêtre 121 et présentant deux premiers bords 122 solidaires du fond 104a et deux deuxièmes bords 123 qui sont libres, c'est-à-dire qu'ils ne sont fixés à aucun autre élément. Dans le mode de réalisation de l'invention, chaque languette 120 s'étend transversalement par rapport à la direction longitudinale X. Ici, les deux premiers bords 122 sont parallèles à la direction longitudinale X et les deux deuxièmes bords 123 sont perpendiculaires à la direction longitudinale X. Les deux premiers bords 122 s'étendent sur la largeur de la languette 120 et les deux deuxièmes bords 123 s'étendent sur la longueur de la languette 120.

Chaque languette 120 est ainsi flexible et peut se déplacer perpendiculairement au plan du fond 104a.

La ou chaque languette 120 est équipée, sur la face opposée au cadre 106a, c'est-à-dire vers l'arrière du fond 104a et donc vers le support 50, d'un moyen de fixation à clip 124, du type clip à ergot. Le moyen de fixation 124 coopère avec le support 50, en particulier en s'insérant dans un trou 52 du support 50 prévu à cet effet. Le moyen de fixation à clip 124 s'insère dans le trou 52 pour fixer l'ensemble 100 au support 50. Dans le cas où le support 50 est un panneau d'un coffre pour occultant, le support 50 présente pour chaque moyen de fixation à clip 124, un trou 52 traversant pour y loger le moyen de fixation à clip 124.

La ou chaque languette 120 est équipée, sur la face qui est du côté du cadre 106a, c'est-à-dire vers l'avant du fond 104a, d'une excroissance 126 qui est en saillie au-dessus du fond 104a. Cette excroissance 126 qui prend ici la forme d'un dôme est enfoncée par le dos 102b du panneau photovoltaïque 102 qui appui dessus lorsqu'il est en place.

En appuyant sur l'excroissance 126, le panneau photovoltaïque 102 enfonce le moyen de fixation 124 qui s'enfonce dans le trou 52 du support 50 pour s'y fixer. La fixation de l'ensemble 100 est alors simple et rapide et ne nécessite pas d'outils ou de fournitures particuliers.

Dans le mode de réalisation de l'invention présenté à la Fig. 2, le fond 104a est équipé de lames ressort 128 arrangées pour pousser le panneau photovoltaïque 102 vers le cadre 106a, pour compenser les tolérances de fabrication.

Dans le mode de réalisation de l'invention présenté ici, le réceptacle 104 présente au moins une paroi longitudinale intérieure 104b, ici au nombre de deux parallèles l'une à l'autre. Les parois longitudinales intérieures 104b s'étendent depuis le fond 104a parallèlement à une direction longitudinale X de l'ensemble 100 et correspondant ici à la grande longueur du panneau photovoltaïque 102. Les parois longitudinales intérieures 104b sont solidaires du fond 104a et s'étendent de part et d'autre du panneau photovoltaïque 102.

Pour fermer latéralement le réceptacle 104, il est également prévu ici des parois transversales 104c s'étendant depuis le fond 104a perpendiculairement à la direction longitudinale X. Le réceptacle 104 est ouvert entre les parois 104b-c.

Les deux parois longitudinales intérieures 104b sont en regard l'une de l'autre et de la même manière, les deux parois transversales 104c sont en regard l'une de l'autre.

Pour chaque paroi longitudinale intérieure 104b, le couvercle 106 présente une paroi longitudinale extérieure 106b s'étendant depuis le cadre 106a et disposée parallèlement en regard et à l'extérieur de la paroi longitudinale intérieure 104b considérée. Les parois longitudinales extérieures 106b sont solidaires du cadre 106a et s'étendent depuis le cadre 106a de part et d'autre du panneau photovoltaïque 102.

Chaque paroi longitudinale extérieure 106b recouvre ainsi la paroi longitudinale intérieure 104b associée.

Le panneau photovoltaïque 102 se retrouve ainsi entre le fond 104a et le cadre 106a.

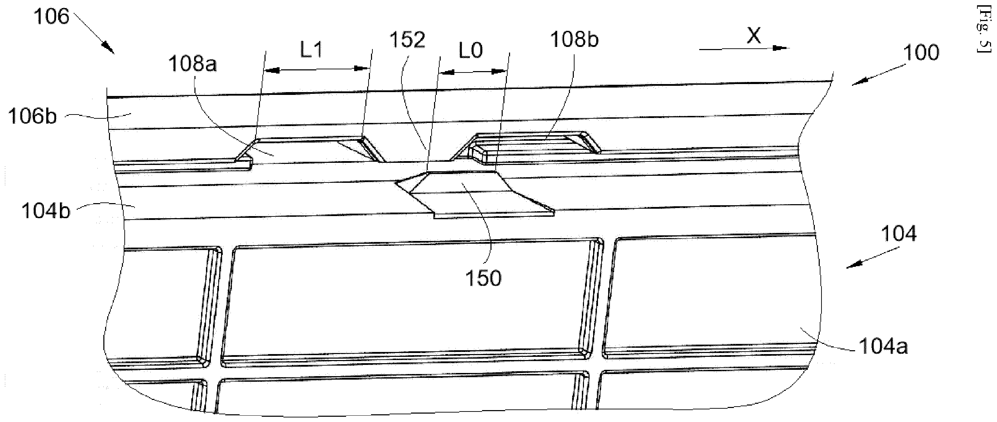

Pour chaque paire constituée d'une paroi longitudinale extérieure 106b et d'une paroi longitudinale intérieure 104b en regard, le ou chaque système de fixation (ici au nombre de trois) assure une fixation amovible desdites parois longitudinales 104b et 106b entre elles. Dans le mode de réalisation de l'invention présenté ici et comme le montrent plus précisément les Figs. 4 et 5, le ou chaque système de fixation comporte un ergot 150 et un contre-ergot 152. La Fig. 5 montre le réceptacle 104 et le couvercle 106 en position désassemblée, c'est-à-dire séparée.

L'ergot 150 est solidaire de la paroi longitudinale intérieure 104b et en saillie vers la paroi longitudinale extérieure 106b, c'est-à-dire vers l'extérieur de la paroi longitudinale intérieure 104b. L'ergot 150 présente parallèlement à la direction longitudinale X, une première longueur L0.

Le contre-ergot 152 est solidaire de la paroi longitudinale extérieure 106b et en saillie vers la paroi longitudinale intérieure 104b, c'est-à-dire vers l'intérieur de la paroi longitudinale extérieure 106b. En position assemblée, comme représenté à la Fig. 4, le contre-ergot 152 vient de l'autre côté de l'ergot 150 par rapport au cadre 106a. L'ergot 150 et le contre-ergot 152 sont ainsi en prise l'un avec l'autre et ne peuvent se séparer l'un de l'autre dans une direction perpendiculaire à la direction longitudinale X.

De part et d'autre du contre-ergot 152 parallèlement à la direction longitudinale X, il est prévu un évidement 108a-b qui présente parallèlement à la direction longitudinale X, une deuxième longueur L1 qui est supérieure à la première longueur L0.

La mise en place du couvercle 106 sur le réceptacle 104 consiste à décaler le couvercle 106 de manière à ce que l'ergot 150 se trouve aligné avec un évidement 108a-b perpendiculairement à la direction longitudinale X. Le couvercle 106 est rapproché du réceptacle 104 selon la direction perpendiculaire à la direction longitudinale X de manière à ce que le contre-ergot 152 dépasse l'ergot 150 selon cette direction. Le couvercle 106 est alors déplacé parallèlement à la direction longitudinale X de manière à aligner l'ergot 150 et le contre-ergot 152 perpendiculairement à la direction longitudinale X. L'ergot 150 et le contre-ergot 152 sont ainsi en prise et en position assemblée.

Le démontage s'effectue de la manière inverse en déplaçant le couvercle 106 parallèlement à la direction longitudinale X de manière à désaligner l'ergot 150 et le contre-ergot 152 et de manière à ce que l'ergot 150 se positionne en face d'un évidement 108a-b. Le couvercle 106 peut alors être retiré.

L'assemblage ne nécessite donc aucun outil.

Pour assurer un meilleur guidage le long de la direction longitudinale X, chaque paroi longitudinale extérieure 106b comporte une rainure 106c dans laquelle loge la paroi longitudinale intérieure 104b associée, et plus particulièrement son sommet. La rainure 106c assure également le blocage selon un axe transversal à la direction longitudinale X, supprime les jeux et évite le désassemblage de l'ensemble 100.

Pour éviter un désassemblage involontaire du couvercle 160 et du réceptacle 104, l'ensemble 100 comporte des moyens de blocage en translation du couvercle 106 par rapport au réceptacle parallèlement à la direction longitudinale X lorsqu'ils sont en position assemblée.

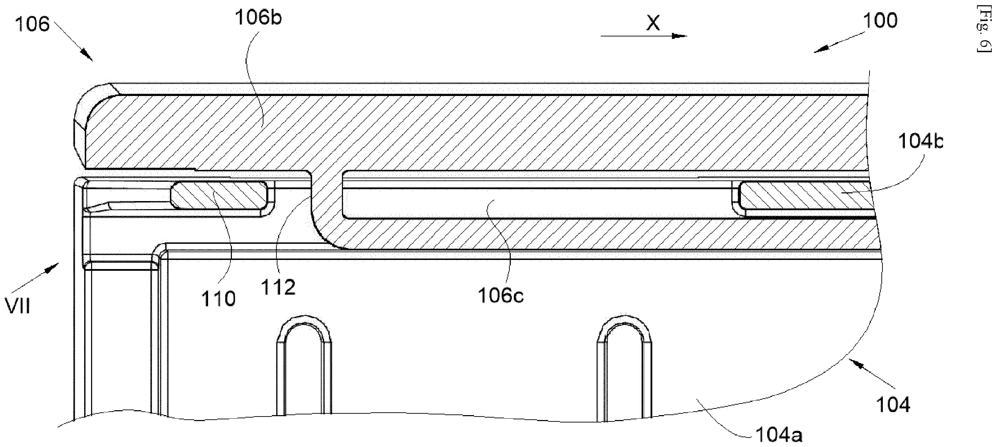

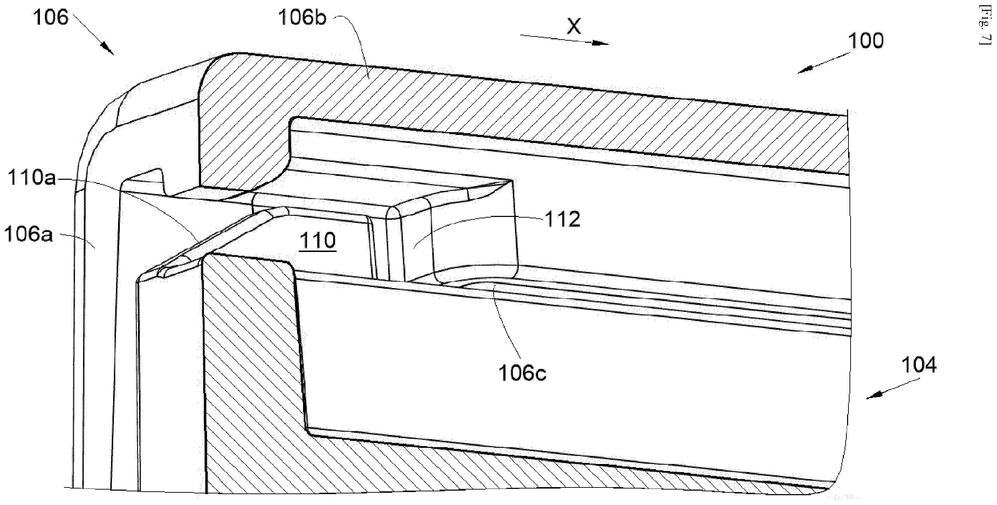

Comme le montrent plus particulièrement les Figs. 6 et 7, les moyens de blocage comportent deux butées 110 qui sont solidaires du réceptacle 104 et disposées le long de la direction longitudinale X et pour chaque butée 110, une contre-butée 112 solidaire du couvercle 106.

Les deux contre-butées 112 sont arrangées entre les deux butées 110 et les butées 110 et contre-butées 112 sont toutes alignées le long de la direction longitudinale X.

Lorsque l'ergot 150 et le contre-ergot 152 associé sont alignés perpendiculairement à la direction longitudinale X, c'est-à-dire en position assemblée, la distance entre chaque butée 110 et la contre-butée 112 associée est inférieure à la première longueur L0, ce qui limite le déplacement du couvercle 106 en-deçà de la distance nécessaire au désassemblage.

La butée 110 présente un profil en pente 110a le long de la direction longitudinale X, ainsi, lorsque le couvercle 106 et le réceptacle 104 sont approchés l'un de l'autre avec les ergots 150 et les contre-ergots 152 décalés, la contre-butée 112 glisse sur la pente 1 10a, ce qui déforme élastiquement le couvercle 106. Au fur et à mesure que le couvercle 106 se déplace le long de la direction longitudinale X, la contre-butée 112 glisse sur la butée 110, jusqu'à atteindre la fin de la butée 110 où le couvercle 106 revient en position normale en descendant de la butée 110.

La déformation du couvercle 106 s'effectue uniquement d'un seul côté lors de l'assemblage.

Pour le désassemblage, il suffit alors de déformer élastiquement le couvercle 106 pour faire passer une contre-butée 112 au-dessus de la butée 110 associée, ce qui libère le mouvement de translation du couvercle 106.

## Revendications

1. Ensemble (100) pour panneau photovoltaïque (102) comportant :
- un réceptacle (104) destiné à recevoir le panneau photovoltaïque (102) et présentant un fond (104a),
- un couvercle (106) comportant un cadre (106a) destiné à être arrangé au-dessus du panneau photovoltaïque (102), et
- au moins un système de fixation qui assure la fixation du couvercle (106) au réceptacle (104),
où le fond (104a) est percé d'au moins une fenêtre (121), où pour chaque fenêtre (121), une languette (120) est arrangée dans la fenêtre (121) et présente deux premiers bords (122) solidaires du fond (104a), et où la ou chaque languette (120) est équipée, sur la face opposée au cadre (106a), d'un moyen de fixation à clip (124) destiné à coopérer avec un support (50) et sur la face du côté du cadre (106a), d'une excroissance (126) en saillie au-dessus du fond (104a), et le fond (104a) est équipé de lames ressort (128) arrangées pour pousser le panneau photovoltaïque (102) vers le cadre (106a).

2. Ensemble (100) selon la revendication 1, **caractérisé en ce que** le réceptacle (104) présente au moins une paroi longitudinale intérieure (104b) s'étendant depuis le fond (104a) parallèlement à une direction longitudinale (X), **en ce que** pour chaque paroi longitudinale intérieure (104b), le couvercle (106) présente une paroi longitudinale extérieure (106b) s'étendant depuis le cadre (106a) et disposée parallèlement en regard et à l'extérieur de la paroi longitudinale intérieure (104b), et **en ce que** pour chaque paire d'une paroi longitudinale extérieure (106b) et d'une paroi longitudinale intérieure (104b), le ou chaque système de fixation assure une fixation amovible desdites parois longitudinales (104b, 106b) entre elles.

3. Ensemble (100) selon la revendication 2, **caractérisé en ce que** le ou chaque système de fixation comporte un ergot (150) solidaire de ladite paroi longitudinale intérieure (104b) et en saillie vers la paroi longitudinale extérieure (106b) et présentant parallèlement à la direction longitudinale (X), une première longueur (L0), et un contre-ergot (152) solidaire de ladite paroi longitudinale extérieure (106b) et en saillie vers la paroi longitudinale intérieure (104b) et arrangé pour venir de l'autre côté de l'ergot (150) par rapport au cadre (106a), où de part et d'autre dudit contre-ergot (152) parallèlement à la direction longitudinale (X), est arrangé un évidement (108a-b) présentant parallèlement à la direction longitudinale (X), une deuxième longueur (L1) supérieure à la première longueur (L0).

4. Ensemble (100) selon la revendication 3, **caractérisé en ce qu'**il comporte des moyens de blocage en translation du couvercle (106) par rapport au réceptacle (104) parallèlement à la direction longitudinale (X).

5. Ensemble (100) selon la revendication 4, **caractérisé en ce que** les moyens de blocage comportent deux butées (110) solidaires du réceptacle (104) et disposées le long de la direction longitudinale (X), pour chaque butée (110), une contre-butée (112) solidaire du couvercle (106), où les deux contre-butées (112) sont arrangées entre les deux butées (110), et **en ce que** lorsque l'ergot (150) et le contre-ergot (152) associé sont alignés perpendiculairement à la direction longitudinale (X), la distance entre chaque butée (110) et la contre-butée (112) associée est inférieure à la première longueur (L0).

6. Ensemble (100) selon l'une des revendications 2 à 5, **caractérisé en ce que** chaque paroi longitudinale extérieure (106b) comporte une rainure (106c) dans laquelle loge la paroi longitudinale intérieure (104b) associée.

7. Coffre pour occultant ou système pour faire de l'ombre comportant un ensemble (100) selon l'une des revendications 1 à 6, un panneau photovoltaïque (102) logé dans le réceptacle (104) et un panneau constituant un support (50) et présentant pour chaque moyen de fixation à clip (124), un trou (52) traversant pour y loger le moyen de fixation à clip (124).
